# EUROPEAN PATENT APPLICATION

(11) **EP 0 596 619 A1**
(43) Date of publication of application: **11.05.1994**
(21) Application number: 93308250.5
(22) Date of filing: 15.10.1993
(51) Int. Cl.: B23Q 17/09, B23B 27/00

(54) **Diamond-coated article with integral wearout indicator**

(30) Priority: 03.11.1992 US 971148
(71) Applicant: CRYSTALLUME, Menlo Park California 94025 (US)
(72) Inventor: Pinneo, John Michael, Redwood City, California 94062 (US)
(74) Representative: Senior, Alan Murray

(57) **Abstract**

A diamond-coated article comprises a first, electrically-conductive diamond layer (14) disposed on a substrate (12) and a second, electrically-insulating diamond layer (16) disposed over the electrically-conductive diamond layer (14). The article may be fabricated by a process including the steps of forming a thin, electrically conductive layer (14) of diamond immediately adjacent to the surface of the substrate (12) of the diamond-coated article, followed by further formation of electrically-insulating diamond material (16) on top of the electrically-conducting layer (14). A method for indicating wear of the article comprises the steps of passing a current between the tool and the workpiece and detecting a change in the flow of current caused by exposure of the first diamond layer (14). Another diamond-coated article comprises a first diamond layer (74) having first optical properties disposed on a substrate (72) and a second diamond layer (76) having second optical properties disposed over the first diamond layer (72). The article may be fabricated by a process including the steps of forming a first layer (74) of diamond having first optical properties immediately adjacent to the surface of the substrate (72) of the diamond-coated article, followed by further formation of a second diamond layer (76) having second optical properties on top of the electrically-conducting layer (74). A method for indicating wear of the article comprises the steps of directing light at the surface of the article and detecting a change in transmission, reflection, scattering, or other optical property of the diamond wear layers (76).

## Description

### BACKGROUND OF THE INVENTION

### 1. Field Of The Invention

The present invention relates to diamond-coated articles. More particularly, the present invention relates to diamond coatings suitable for non-destructive wear indication and to methods for determining wear indication using selected properties of diamond coatings.

### 2. The Prior Art

In cutting and machine operations such as milling, turning, boring, etc., wearout of the cutting tool eventually occurs. Depending on the specifics of the operation,tool wearout can contribute substantial costs to the process, both through down time required to install new tools, and to damage done to the component being fabricated by the worn or broken tool, whose performance characteristics degrade during wearout. Different technologies have been employed to detect wearout of cutting tools in order to avoid workpiece damage. In one technology, microphones and computer audio signal processors are used to monitor the sound produced during machining operations. Departure from normal acoustic signatures signals tool failure or wearout, triggering machine shutdown. This technology is not completely satisfactory due to its cost, relative unreliability (acoustic signatures of worn tools are very similar to those produced during normal machining operations), and the inability of the method to predict tool wearout in advance of the event.

Cutting tool materials such as tungsten carbide, titanium nitride, titanium carbide, and similar metallic materials do not support fabrication of simple electronic wearout detection methods such as that described in the present invention because they are all electrically conductive and do not admit of modification of their resistance properties without deleteriously perturbing their mechanical properties, thereby degrading their performance characteristics. On the other hand, cutting tool materials such as silicon carbide, silicon nitride, and aluminum oxide are all electrical insulators whose resistivity cannot be lowered without compromising the desired mechanical cutting properties. Diamond is unique as a cutting tool material in that its electrical properties (and other properties, such as optical properties) can be modified dramatically without changing its mechanical properties.

Many of the applications for diamond films are directed at improving resistance to mechanical wear of components to which diamond films are applied. Thus, applications have been found for diamond films in long-life bearings, cutting tools, etc., which depend on diamond's unparalleled hardness, strength, and other mechanical properties.

Although diamond confers extremely long wear lifetimes, the material does eventually wear out. Wearout of the diamond coating is often accompanied by increased friction at bearing surfaces, degraded surface finish on workpieces being machined by diamond tools, etc. It would be extremely useful to have a diamond coating which could provide a reliable indication of impending wearout, but which incorporated substantially only diamond in its construction, to avoid problems of change in operating characteristics when non-diamond indicating or sensing materials are used.

### BRIEF DESCRIPTION OF THE INVENTION

According to the present invention, diamond-coated articles are manufactured so as to provide a means of detecting when an outer portion of the diamond layer has worn down to a point at which replacement or repair of the article should be considered, but which in no way impairs the operation of the component during the life of the remaining diamond material.

According to a first embodiment of the present invention, a diamond-coated article comprises a first, electrically-conductive diamond layer disposed on a substrate and a second, electrically-insulating diamond layer disposed over the electrically-conductive diamond layer. The article according to this aspect of the invention may be fabricated by a process including the steps of forming a thin, electrically conductive layer of diamond immediately adjacent to the surface of the substrate of the diamond-coated article, followed by further formation of electrically-insulating diamond material on top of the electrically-conducting layer. A method for indicating wear comprises the steps of passing a current between the tool and the workpiece and detecting a change in the flow of current caused by exposure of the first diamond layer.

Variations of this embodiment are apparent, such as use of ac rather than dc potentials to provide continuous monitoring of wear on insulating diamond layers through monitoring of capacitance changes. Another variant involves the use of a thin layer of non-diamond electrically conductive material (such as a metal like molybdenum) to provide an electrical connection to the diamond if it should be desired to put the diamond coating on an electrically insulating substrate material. An example of this might be the use of a diamond wear layer on a dielectric material like quartz. These variations of implementation do not involve the central invention, which is diamond-coated articles which can signal wearout-in advance of the event.

According to a second embodiment of the present invention, a diamond-coated article comprises a first diamond layer having first optical properties disposed on a substrate and a second diamond layer having second optical properties disposed over the first diamond layer. In this embodiment, one of the first and second diamond layers are made relatively more opaque or transparent with respect to the other by manipulation of the diamond deposition process. According to this embodiment of the invention, the wearout signal consists of a change in transmission, reflection, scattering, or other optical property of the diamond wear layers.

Diamond-coated tools according to the present invention are novel in that it cannot be accomplished with other cutting materials because their characteristics cannot be modified without altering their mechanical wear characteristics. The diamond-coated articles of the present invention are useful because they provides wear components with the unique combination of the hardest known material (for longest service life) coupled with the capacity for signaling impending component wearout prior to catastrophic failure.

### BRIEF DESCRIPTION OF THE DRAWINGS

FIG. 1 is a cross-sectional view of a diamond-coated article according to a first embodiment of the invention wherein a difference in electrical conductivity of portions of the diamond coating is used to indicate wear.

FIG. 2 is an equivalent schematic diagram illustrating apparatus used to provide a wear-indication signal from a diamond-coated article such as shown in FIG. 1

FIG. 3a is a schematic representation of a diamond-coated tool article of FIG. 1 under test prior to wearout.

FIG. 3b is a schematic representation of a diamond-coated tool article of FIG. 1 under test at its wearout-indicating region.

FIG. 4a is a schematic representation of a diamond-coated bearing according to the embodiment of FIG. 1 under test prior to wearout.

FIG. 4b is a schematic representation of a diamond-coated bearing according to the embodiment of FIG. 1 under test at its wearout-indicating region.

FIG. 5 is a cross-sectional view of a diamond-coated article according to a second embodiment of the invention wherein a difference in optical properties of portions of the diamond coating is used to indicate wear.

FIG. 6a is a schematic representation of a diamond-coated tool article of FIG. 5 under test prior to wearout.

FIG. 6b is a schematic representation of a diamond-coated tool article of FIG. 5 under test at its wearout-indicating region.

### DETAILED DESCRIPTION OF A PREFERRED EMBODIMENT

Those of ordinary skill in the art will realize that the following description of the present invention is illustrative only and not in any way limiting. Other embodiments of the invention will readily suggest themselves to such skilled persons.

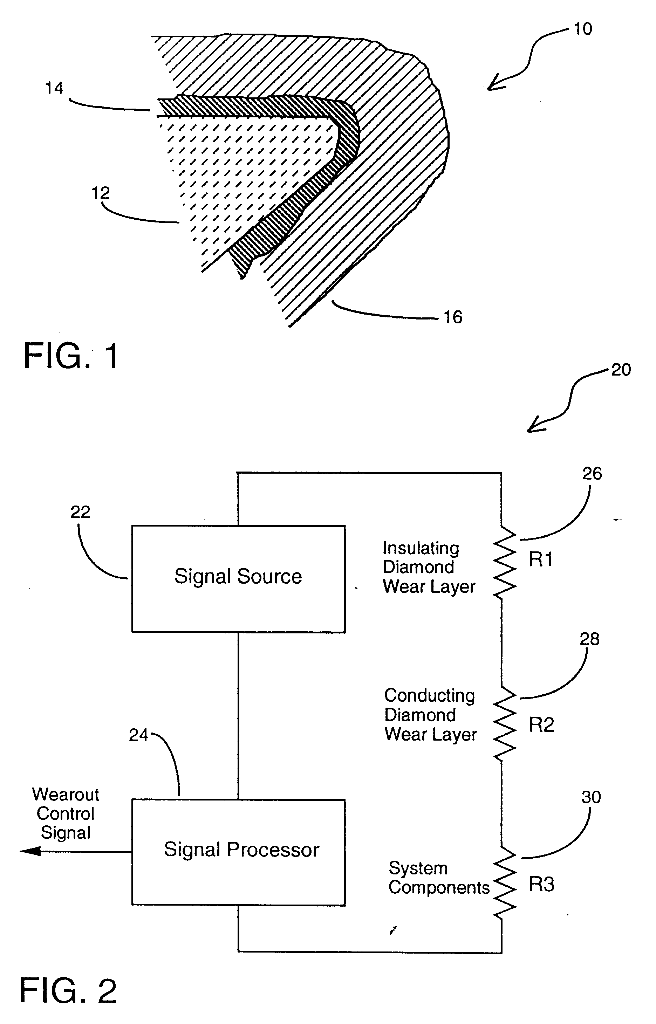

Referring first to FIG. 1, a cross-sectional view is shown of a diamond-coated article 10 according to a first embodiment of the invention wherein a difference in electrical conductivity of portions of the diamond coating is used to indicate wear. As can be seen from FIG. 1, diamond-coated article 10 comprises a substrate 12, upon which the diamond coating is deposited. Substrate 12 may be, for example, a tungsten carbide cutting tool, but those of ordinary skill in the art will recognize that the principles of the present invention may be applied to any article which is used in an environment in which it will be subject to wear and for which eventual replacement will thus be required. Other examples include, but are not limited to steel tools, such as drills, reamers, taps, and the like.

A first adherent layer of diamond material 14 is disposed on at least a portion of substrate 12. This embodiment of the invention takes advantage of the ability to control the diamond deposition process to alter diamond's electrical conductivity, and first diamond layer 14 thus comprises a thin, electrically conductive layer of diamond immediately adjacent to the surface of the diamond-coated article. According to a presently preferred embodiment of the invention, layer 14 may be formed to a thickness of between about 2 microns and 5 microns, although those of ordinary skill in the art will understand that the thickness of this layer is not critical to accomplish the objectives of the invention.

A second adherent layer of diamond material 16 is disposed over first layer 14. Second diamond layer 16 comprises a layer of electrically-insulating diamond material on top of the electrically-conducting layer. According to a presently preferred embodiment of the invention, second diamond layer 16 may be formed to a thickness of between about 20 microns and 30 microns, although those of ordinary skill in the art will understand that the thickness of this layer is not critical to accomplish the objectives of the invention.

According to a presently preferred embodiment of the invention, adherent diamond films may be formed on an appropriately prepared substrate by a two-stage growth chemical vapor deposition (CVD) process. A mixture of hydrogen, methane, and diborane gases are admitted to a microwave plasma assisted CVD reactor of a configuration commonly known to those skilled in the art. Hydrogen is allowed to flow at 200 sccm, methane at 4 sccm, and diborane at an equivalent flow rate of 001 sccm. The diborane is typically supplied as a dilution of diborane in hydrogen for accurate, practical gas delivery, as is commonly done in the practice of CVD. Microwaves of 2.45 GHz frequency at a power level of 1500 watts are directed into the gas mixture, which is held at a pressure of 60 Torr. A plasma region forms in the chamber as a consequence of microwave activation of the gases, and diamond deposition occurs on cutting tools places near the activation region in a fashion familiar to those skilled in the art. The diamond layer incorporates a minute portion of boron (supplied by the diborane gas) which renders it electrically conductive through well-known mechanisms involving semiconductor activity of boron in diamond. After a sufficiently thick diamond layer is formed ( typically 2-5 microns), the process is interrupted by turning off the microwave power source and evacuating all gases from the chamber. The process is then continued by re establishing the hydrogen and methane flows, but not the diborane. Microwave power is reapplied, and plasma ignition occurs. Additional diamond is deposited over the diamond layer earlier deposited. This additional diamond is substantially electrically insulating compared with the first diamond layer because of the absence of boron, without which little electrical conductivity is observed in the diamond. After a suitably thick second diamond layer is formed (typically 20-30 microns additional thickness), the deposition process is terminated and the coated cutting tools arc removed from the reactor. Total growth duration required will vary with specific reactor conditions, but will typically lie between 5 microns/hour to 1.0 microns/hour.

The above-described diamond deposition process results in a diamond coating which has a superior adherence to the substrate material. For example, when a diamond coating according to the present invention is deposited on a tungsten carbide substrate, and the resulting article is employed as a diamond-coated cutting tool, the tool fails as a result of the diamond coating wearing out rather than delaminating from the substrate.

In order to control the electrical conductivity of the diamond coating, changes in the deposition chemistry are employed. As presently preferred, controlled impurity atoms may be introduced into the diamond structure without affecting its physical properties. It is well known in the art that an electrically conductive diamond layer can readily be formed by the addition of a few parts per million of boron to the gas mixture which is used to deposit the film. Boron is easily added to the gas mixture by using a gaseous boron source such as diborane, a commonly-available manufacturing chemical sold principally for use in manufacture of semiconductor devices. The very few parts per million of boron required to render the diamond electrically conductive do not significantly change its mechanical, thermal, or chemical properties with respect to the applications contemplated within this invention.

Referring now to FIG. 2, a wear-indicator apparatus 20 for providing a wear-indication signal according to the present invention is shown in block diagram form. Wear-indicator apparatus 20 comprises a signal source 22 and a signal processor 24. As shown in FIG. 2, signal source 22 and signal processor 24 are connected in a series circuit series with three resistances 26, 28, and 30, which represent the real components of a circuit comprising the diamond article of FIG. 1. Resistance 26 is the component of the total circuit resistance which comprises the resistance of the second (insulating) diamond layer 16 of FIG. 1. Resistance 26 is typically a very large value, i.e., the resistivity of the diamond material is in the range of about 1x10⁴ ohm-cm. Resistance 28 is the component of the total resistance comprising the resistance of the first (conductive) diamond layer 14. The value of this component of the total series resistance will depend on the manner in which diamond layer 14 is rendered conductive. For example, when boron is used to alter the conductivity of the diamond layer 16, the resistivity of the diamond material may be in the range of about 1x10⁻³ ohm-cm to 1x10⁴ ohm-cm. Finally, resistance component 30 comprises the total resistance of the remaining system components, including the substrate material and the other components in the circuit path.

According to another aspect of the present invention, a process is described for determining the state of wear of a diamond-coated article by measuring the change in electrical properties of the article as a result of the wearing off of second diamond layer 16. A measured change in electrical properties indicates the absence of the second diamond layer 16. The typical application in this regard is determining the degree of wear of a tool.

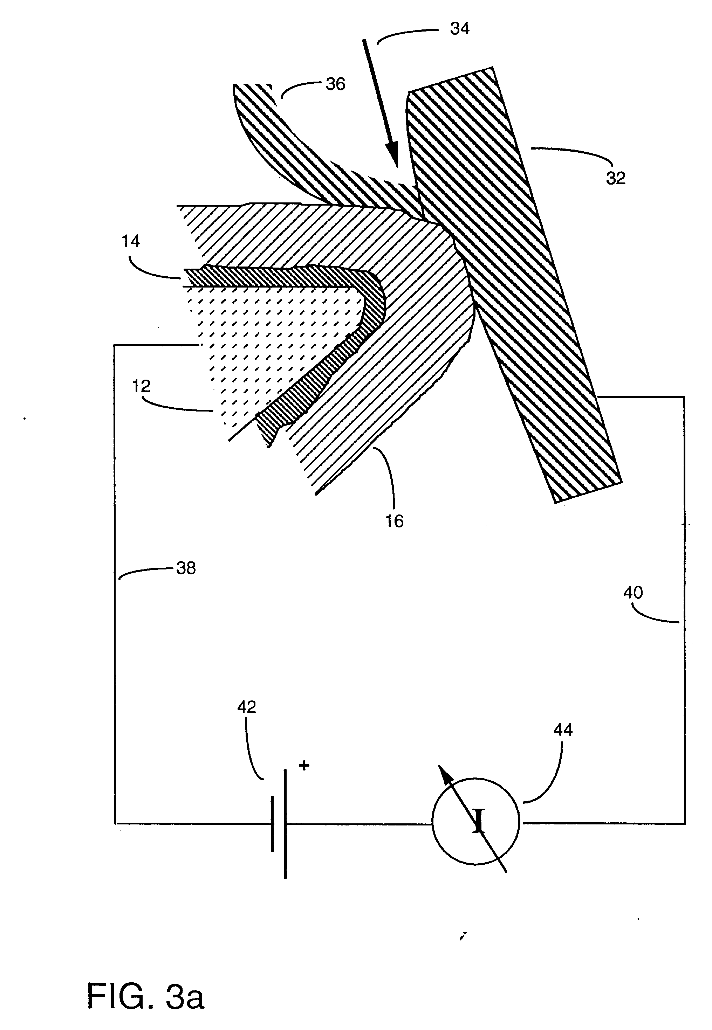

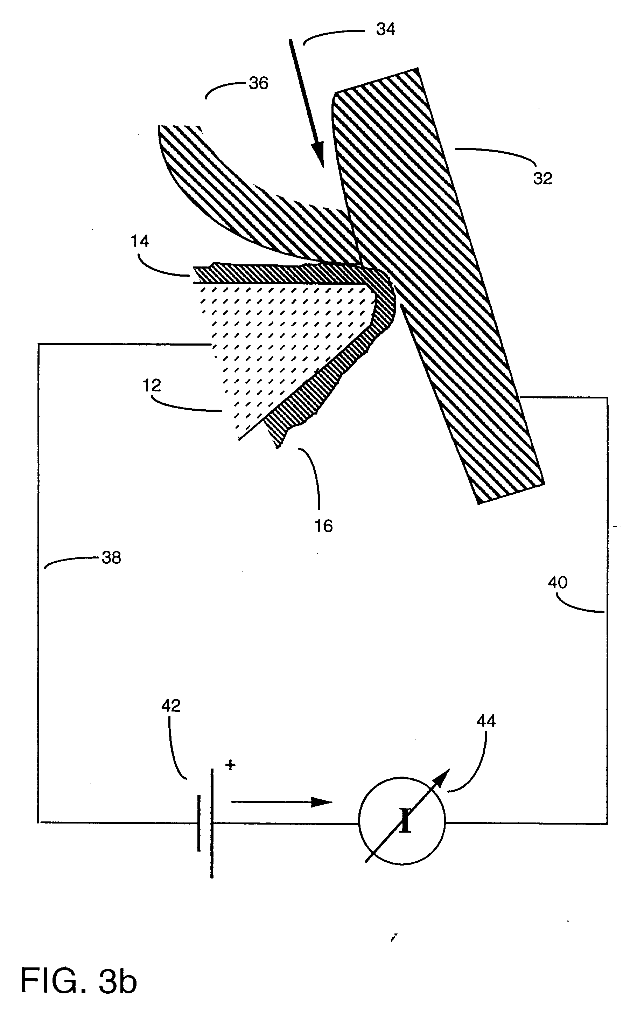

Referring now to FIGS. 3a and 3b, a typical application of the present invention is depicted, wherein the diamond-coated article is a tungsten carbide cutting tool comprising substrate 12, first conductive diamond layer 14, and second insulating diamond layer 16. The tool is shown cutting workpiece 32, which is moving against the tool in the direction of the arrow 34. Chip 36 is shown separating from workpiece 32. An electrical conductor 38 is connected between substrate 12 and a voltage source, shown symbolically as a battery symbol 42. Another electrical conductor is connected between the workpiece 32 and a current measuring device, shown symbolically as ammeter 44. Conventional means for rotating contacts may be used in cases which involve rotating workpieces, such as turning on a lathe. For stationary workpieces, such as those involved in milling, boring, or other such operations, a simple wire attached to the workpiece is adequate.

As shown in FIG. 3a, the tool is relatively unworn and insulating second diamond layer 16 is in contact with workpiece 32, and thus resistors 26, 28, and 30 comprise a series circuit with battery 42 and ammeter 44. Due to the superior electrical insulation properties of the diamond initially exposed to the cutting operation, no current flows between the tool and the workpiece. As the diamond coating wears through, the electrically conductive diamond layer eventually becomes exposed to the workpiece and a small current flows between it and the workpiece. As shown in FIG. 3b second diamond layer 16 has been worn away and first conductive diamond layer 14 of the tool is in contact with workpiece 32, and thus resistors 28 and 30 comprise the series circuit with battery 42 and ammeter 44. This current can be easily detected and used to inform an operator of remaining tool life, or can direct a computer to schedule an automated tool change. Since the electrically conductive diamond layer does not differ in its cutting characteristics from the electrically insulating layer, no degradation of the cutting process need occur. This is particularly important for machining operations which produce high value workpieces, because a degradation in machining characteristics late in the fabrication of such a workpiece can lead to very large economic losses. It is also advantageous in that it permits regularly scheduled downtime for tool replacement, and allows the maximum life to be attained from each tool, if the user so desires.

It will be further appreciated that detection of delamination of the diamond film from the underlying substrate can be accomplished by applying somewhat more sophisticated signal processing technology to the current passing between the tool and the workpiece. If the diamond film should begin to crack, a precursor to delamination, the resultant rapid changes in current can be detected and used to initiate immediate withdrawal of the tool from the cutting surface, avoiding destruction of the workpiece.

Environments in which electrically conductive cutting fluids are used present little problem because these fluids are relatively poor conductors of electricity, and contribute no more than a small background noise signal which can be removed by simple signal processing techniques known to the art. As indicated by the arrow in ammeter 44, the drop in resistance resulting from the wearing away of insulating second diamond layer 16 causes the current level to rise measurably, thus indicating that the tool is close to the end of its useful life.

Variations of this embodiment of the present invention will be apparent to those of ordinary skill in the art. For example, AC rather than DC potentials may be used to provide continuous monitoring of wear on insulating diamond layers through monitoring of capacitance changes caused by the thinning of the insulating layer, which acts as the capacitor dielectric. Another variant of the present invention involves the use of a thin layer of an electrically-conductive non-diamond material (such as a metal like molybdenum) to provide an electrical connection to the diamond. This embodiment may be used in situations where the material from which substrate 12 is made is an electrically insulating substrate material. For example, of a diamond wear layer may be disposed on a dielectric material such as quartz. Those of ordinary skill in the art will readily realize that these variations and other similar departures from the disclosed embodiments herein are within the scope of the present invention.

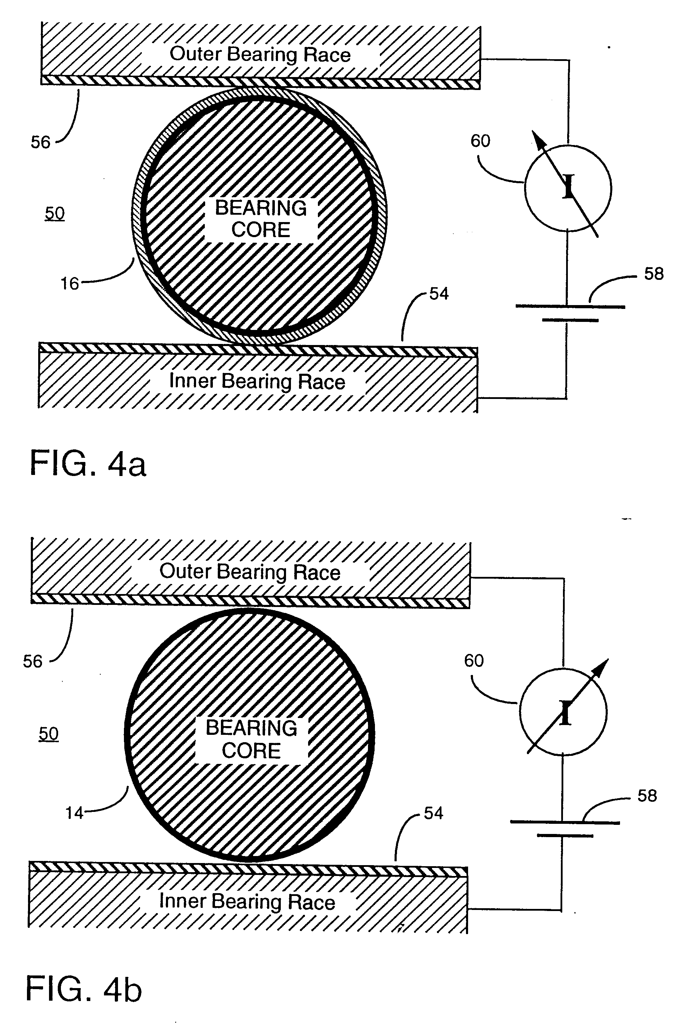

Another application of the present invention is shown in FIGS. 4a and 4b. The unsurpassed hardness and low friction characteristics of diamond make it a superlative bearing material. The ability to alter its electrical properties as described allows the production of diamond-coated bearings which can signal their wearout in advanced of the event, preventing catastrophic bearing and machine failure.

Referring first to FIG. 4a, a bearing assembly 50 is shown in which a diamond-coated bearing 52 is held between an inner bearing race 54 and an outer bearing race 54. As in the embodiment of FIGS. 3a and 3b, voltage source 58 and 60 are connected between inner bearing race 54 and outer bearing race 56. In FIG. 4a, the bearing 52 is relatively new and insulating second layer 16 of the diamond coating is in contact with races 54 and 56. In operation, the bearing assembly as shown in FIG. 4a does not pass an appreciable electrical current due to the presence of second layer 16 of insulating diamond on the rolling element. After sufficient time, the insulating diamond layer wears away, exposing the underlying conductive diamond and completing an electrical circuit which signals the impending wearout of the bearing. This condition is illustrated in FIG. 4b.

It will be appreciated by those skilled in the art that minor variations of the foregoing invention embodiment will serve to provide the wearout prediction function for sleeve, journal, or other types of non rolling-element bearings, as well as other wear resistant components of various types.

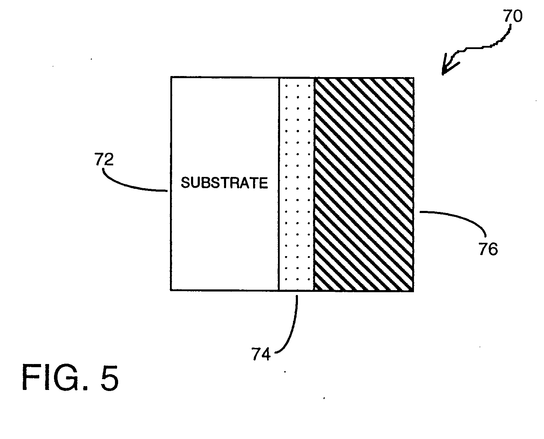

According to another embodiment of the present invention as illustrated in FIG. 5, an article 70 comprises a substrate 72 coated with a first diamond layer 74 whose optical properties have been arranged to be different from those of a second overlying diamond layer 76, in direct analogy to the electrically conductive diamond layer described above. In the illustrative embodiment of FIG. 5, the article is a paper guide for high speed paper feeding in paper manufacturing applications and a quartz substrate 72 is employed. Substrate 72 is coated with a first adherent diamond layer 74 which is relatively transparent. A second adherent diamond layer 76 is disposed over first diamond layer 74. Second diamond layer 76 is relatively opaque.

The diamond layers of the article of FIG. 5 can be made relatively more opaque or transparent by manipulation of the deposition process. In this embodiment, the wearout signal consists of a change in transmission, reflection, scattering, or other optical property of the diamond wear layers. In the particular embodiment illustrated in FIG. 5, the change is from little or no light transmission to substantial light transmission.

It is readily apparent to those skilled in the art of diamond synthesis through chemical vapor deposition (CVD) methods that a diamond artifact or layer can be made relatively opaque to visible light by elevation of carbon concentration in the growth gas mixture, by elevation of the deposition temperature, by cyclic renucleation of the diamond material during the growth phase, and by other techniques known to those skilled in the art.

For example, during diamond deposition carried out using microwave plasma CVD at a deposition temperature of approximately 800°C using a gas pressure of 60 Torr and a gas mixture consisting of 99% volume % H₂ and 1% CH₄ as a carbon source, a relatively transparent polycrystalline diamond film useable as layer 74 is produced by deposition on a suitable substrate such as silicon. If deposition conditions are then changed by increasing CH₄ concentration to at least 5%, a diamond material with considerably greater opacity (useable as diamond layer 76) will be formed. If the CH4 concentration is maintained for a period of time adequate to deposit a few microns of such reduced opacity diamond film, a substantially opaque layer of material can be formed, which can then be overgrown by further deposition of substantially transparent diamond formed by reduction of CH₄ concentration to the originally used 1%. It will be appreciated by those skilled in the art that other deposition modalities (e.g., hot filament, plasma torch, combustion torch, DC glow discharge, etc.) will require varied conditions particular to each modality.

The utility of a structure like that of FIG. 5 having a thick opaque diamond layer supported by a relatively thin transparent diamond layer consists in the ability to optically detect wearout of the overlying thick opaque diamond layer 76 in a non-destructive manner.

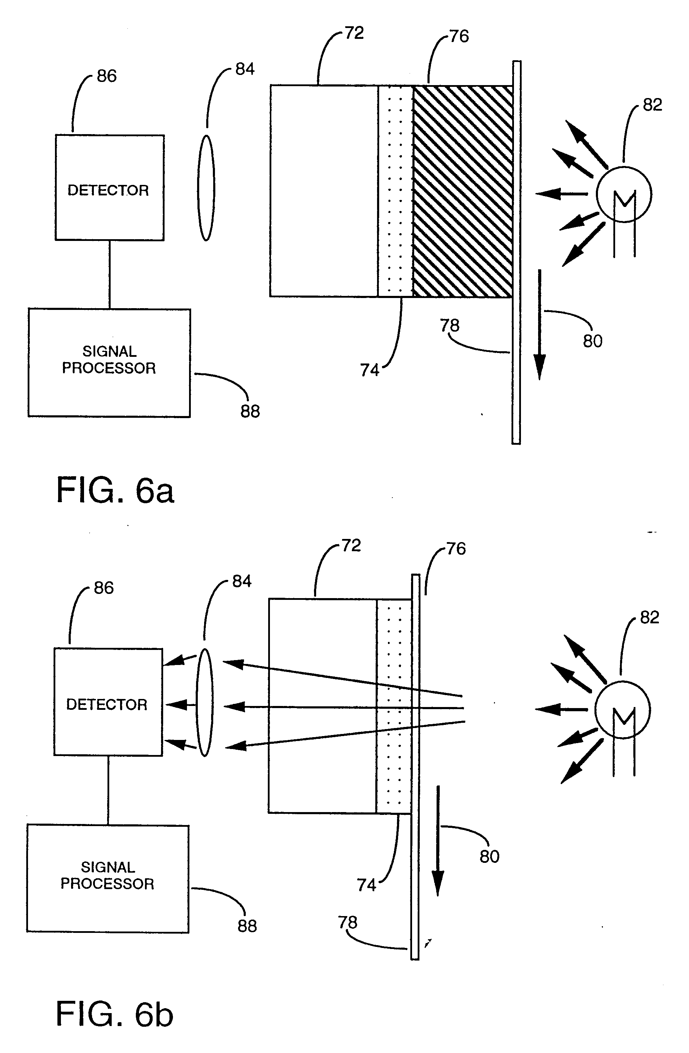

Referring now to FIGS. 6a and 6b, this process is shown using a block diagram of wear-detection apparatus according to the present invention. Referring first to FIG. 6a, a continuous sheet of paper is in motion in the direction indicated by arrow 80 and is in contact with paper guide comprising quartz substrate 72, first transparent adherent diamond layer 74 and second adherent opaque diamond layer 76. The paper 78 and paper guide 70 are interposed between a light source 82, a signal collecting lens 84 and a photodetector 86. The signal from photodetector 86 is passed to signal processor 88, which may comprise a simple microprocessor based analyzer as will be appreciated by those of ordinary skill in the art.

As shown in FIG. 6a, second opaque diamond layer 76 is substantially thick, having been subjected to little wear. The opaque diamond layer 76 blocks the transmission of substantially all light from light source 82 such that no light is received by photodetector 86. Over time, the overlying opaque layer 76 is worn through and further wear occurs in the underlying transparent layer 74, as depicted in FIG. 6b. As shown in FIG. 6b, light illuminating the wear surface will begin to pass through the transparent layer 74 as overlying opaque layer 76 is worn through. Those of ordinary skill in the art will recognize that light will begin to be transmitted somewhat prior to the complete wearthrough of opaque layer 76. This light can be detected, and its intensity and rate of change of intensity with time can be used to determine the degree of wear of the opaque layer 76 as well as the rate of wear. Variations of this structure involving more than two layers of varying optical properties are within the scope of this invention.

As will be appreciated by those of ordinary skill in the art, the utility of the optical embodiment is the ability to operate without the need for contacting the article to produce electrical signals in environments for which implementation of the electrical preferred embodiment might be impractical, such as in fluids which are heavily electrically conductive or in high levels of electromagnetic interference.

Thus, a diamond-coated cutting tool according to the present invention has the unique and valuable property of providing a signal which indicates impending wearout of the tool, but not at the cost of degraded performance during the remaining life of the tool. An example of cost savings attendant to the use of a cutting tool fabricated according to the present invention is the machining of aluminum automobile engine blocks. These are complex components, and during final machining operations such as cylinder finishing, the value added as a result of prior machining and inspection operations is substantial. Tools fabricated according to the present invention substantially reduce or eliminate scrap losses of engine blocks caused by unforseen tool wearout, allowing significant improvements in production economics.

A similar savings in downtime, with an additional increment in operational safety, is available through the application of the current invention to bearings in jet engines. Bearings in jet engines are critical portions of the engines, whose flight performance is absolutely dependent on stable performance of bearings in a number of engine locations. The ability to monitor bearing wear through simple electrical signals allows in-flight detection of impending bearing wearout, and permits optimum scheduling of bearing maintenance. Since aircraft operating costs and revenues depend strongly on engine reliability and performance,, bearing wearout prediction increases safety, maximizes revenue through providing maximum engine utilization, and reduces costly unscheduled maintenance.

While embodiments and applications of this invention have been shown and described, it would be apparent to those skilled in the art that many more modifications than mentioned above are possible without departing from the inventive concepts herein. The invention, therefore, is not to be restricted except in the spirit of the appended claims.

## Claims

1. An article comprising at least two adherent layers of diamond material over at least a portion of an outer surface thereof, a first layer of diamond material having a first electrical resistivity and a second layer of diamond material having a second electrical resistivity detectably different from said first electrical resistivity.

2. The article of claim 1 comprising said two adherent layers over at least a portion of a non-diamond substrate material.

3. The article of claim 1 wherein said first layer of diamond material is substantially an electrical conductor and said second layer of diamond material is substantially an electrical insulator.

4. The article of claim 3 wherein said first layer of diamond material includes a controlled amount of impurity atoms to render it conductive and said second layer of diamond material is substantially free of said impurity atoms.

5. The article of claim 4 wherein said impurity atoms are boron in a concentration of between about 0.1 and 1x10⁵ parts per million.

6. The article of claim 2 comprising a tool for removing material from a workpiece.

7. The article of claim 4 wherein said first layer of diamond material is substantially an electrical conductor and said second layer of diamond material is substantially an electrical insulator.

8. The article of claim 6 wherein said first layer of diamond material includes a controlled amount of impurity atoms to render it conductive and said second layer of diamond material is substantially free of said impurity atoms.

9. The article of claim 8 wherein said impurity atoms are boron in a concentration of between about 0.1 and 1x10⁵ parts per million.

10. The article of claim 2 comprising a bearing.

11. The article of claim 10 wherein said first layer of diamond material is substantially an electrical conductor and said second layer of diamond material is substantially an electrical insulator.

12. The article of claim 11 wherein said first layer of diamond material includes a controlled amount of impurity atoms to render it conductive and said second layer of diamond material is substantially free of said impurity atoms.

13. The article of claim 12 wherein said impurity atoms are boron in a concentration of between about 0.1 and 1x10⁵ parts per million.

14. The article of claim 2 comprising an article subject to wear during its normal intended use.

15. The article of claim 14 wherein said first layer of diamond material is substantially an electrical conductor and said second layer of diamond material is substantially an electrical insulator.

16. The article of claim 15 wherein said first layer of diamond material includes a controlled amount of impurity atoms to render it conductive and said second layer of diamond material is substantially free of said impurity atoms.

17. The article of claim 16 wherein said impurity atoms are boron in a concentration of between about 0.1 and 1x10⁵ parts per million.

18. An article comprising at least two adherent layers of diamond material over at least a portion of an outer surface thereof, a first layer of diamond material having a first optical property and a second layer of diamond material having a second optical property detectably different from said first optical property.

19. The article of claim 18 comprising said two adherent layers over at least a portion of a non-diamond substrate material.

20. The article of claim 18 wherein said first layer of diamond material is substantially more optically transmissive than said second layer of diamond material.

21. The article of claim 20 wherein said first layer of diamond material is fabricated in a chemical vapor deposition process employing about 1% CH₄ by volume and said second layer of diamond material is fabricated in said chemical vapor deposition process employing greater than about 5% CH₄ by volume.

22. The article of claim 19 comprising a tool for removing material from a workpiece.

23. The article of claim 19 wherein said first layer of diamond material is substantially more optically transmissive than said second layer of diamond material.

24. The article of claim 23 wherein said first layer of diamond material is fabricated in a chemical vapor deposition process employing about 1% CH₄ by volume and said second layer of diamond material is fabricated in said chemical vapor deposition process employing greater than about 5% CH₄ by volume.

25. The article of claim 18 comprising a bearing.

26. The article of claim 25 wherein said first layer of diamond material is substantially more optically transmissive than said second layer of diamond material.

27. The article of claim 26 wherein said first layer of diamond material is fabricated in a chemical vapor deposition process employing about 1% CH₄ by volume and said second layer of diamond material is fabricated in said chemical vapor deposition process employing greater than about 5% CH₄ by volume.

28. A method for determining the degree of wear of an article while said article is in use, said article comprising a substrate covered by a first layer of diamond material having a first electrical resistivity and a second layer of diamond material having a second electrical resistivity detectably different from said first electrical resistivity, comprising the steps of:
(1) Providing a source of electric current;
(2) passing electric current from said source through said article; and
(3) measuring the value of said electric current.

29. A method for determining the degree of wear of a cutting tool while said cutting tool is in use in contact with a workpiece, said cutting tool comprising a substrate covered by a first layer of diamond material having a first electrical resistivity and a second layer of diamond material having a second electrical resistivity detectably different from said first electrical resistivity, comprising the steps of:
(1) Providing a source of electric current;
(2) passing electric current from said source through said article and said workpiece; and
(3) measuring the value of said electric current.

30. A method for determining the degree of wear of an article while said article is in use, said article comprising a substrate covered by a first layer of diamond material having a first optical property and a second layer of diamond material having a second optical property detectably different from said first electrical resistivity, comprising the steps of:
(1) Providing a light source at a first position relative to said article; (2) providing a photodetector at a second position relative to said article selected to intercept light transmitted through said article;
(2) directing radiation from said light source to said article; and
(3) measuring the amount of light received by said photodetector.

31. A method for determining the degree of wear of an article while said article is in use, said article comprising a substrate covered by a first layer of diamond material having a first optical property and a second layer of diamond material having a second optical property detectably different from said first electrical resistivity, comprising the steps of:
(1) Providing a light source at a first position relative to said article;
(2) providing a photodetector at a second position relative to said article selected to intercept light reflected from said article;
(2) directing radiation from said light source to said article; and
(3) measuring the amount of light received by said photodetector.
